# EUROPEAN PATENT SPECIFICATION

(11) **EP 3 163 705 B1**
(45) Date of publication and mention of the grant of the patent: **10.01.2018**
(21) Application number: 15192392.7
(22) Date of filing: 30.10.2015
(51) Int. Cl.: H02J 3/00, G01D 4/00, G06Q 50/06

(54) **AN ELECTRICITY SUPPLY CONTROL SYSTEM AND A METHOD THEREOF**
ELEKTRIZITÄTSZUFÜHRUNGSSTEUERUNGSSYSTEM UND VERFAHREN DAFÜR
SYSTÈME DE COMMANDE D'ALIMENTATION ÉLECTRIQUE ET PROCÉDÉ ASSOCIÉ

(43) Date of publication of application: 03.05.2017
(73) Proprietor: Överås Invest AB, 41266 Göteborg (SE)
(72) Inventor: Sandahl, Kristian, 412 54 Göteborg (SE)
(74) Representative: Awapatent AB

(56) References cited:
- EP-A1- 2 523 139
- EP-A1- 2 565 586
- WO-A1-01/06612
- WO-A1-02/084558
- WO-A2-98/38844
- US-A1- 2011 204 720
- US-A1- 2014 049 109

## Description

### TECHNICAL FIELD OF THE INVENTION

The present invention relates to an electricity supply control system and method for selection of electricity supply, more specifically it relates to a computer implemented system and method for automatic selection of electricity supply.

### BACKGROUND

Rate tariffs for electricity are often complex and confusing to consumers, especially since the energy market was liberalized (i.e. denationalised or deregulated) and in some context opened up to allow for competition. Even though this somewhat revolutionary change should be understood as something that is effectively very beneficial for the consumer it nevertheless brought some new problems and issues for the average consumer. The constantly changing rates (tariffs) together with the huge number of contracts (subscriptions) offered by the now plurality of suppliers can easily result in a lot of confusion and anxiety for the consumers. The pressure of choosing the right subscription (i.e. the right duration) at the right moment from the right supplier in order to make the most financially beneficial choice can at times be overwhelming, and even more so with the recent efforts to also offer environmentally conscious choices.

In general, after the choice of supplier has been made, the predicament for the consumers consists of deciding between a floating/variable rate (without any contract period) and a fixed rate (with a predefined contract period). It is often at this step it becomes difficult for the consumers to make an informed choice, mainly due to lack of expertise and proper resources. However, even with the proper expertise and unlimited resources it is sometimes simply impossible to predict the future prices of electricity, in particular over a longer period of time, e.g. longer than 3 years. Thus, the consumers are left with making a choice that many times has a significant impact on their finances, and the impact is generally proportional to the electricity consumption, which means that making the "right" choice becomes more important the more electricity you consume.

To this end there is no system that provides a solution which relieves the consumers of the above described anxiety ridden decision. Currently there are rate aggregators available, but these do not assist consumers particularly well in making an educated decision. There are also systems implementing the Economy 7 or Economy 10 differential tariffs, these are however not very flexible and do not really solve the problem other than providing means for saving some money if one is willing to sacrifice the comfort of being able to utilize any household device at any time of the day.

EP 2 565 586 describes a metering reporting communication method for pricing of utility consumptions metered by utility meters within a communication network comprising at least one data concentrator proxy located as intermediate device between utility meters and at least one utility provider. The data concentrator is used to establish secure communications with each utility provider, receive the tariffs table, select the best offerings based on this information, and send regular consumption report to the appropriate provider in order to facilitate invoicing and reduce the amount of information that each utility provider needs to manage. However, this method and system relies on the presence of smart-grids and smart-meters, and is not applicable for the majority of power grids today.

There is therefore a need for an improved system and method for controlling the supply of electricity to consumers that rids consumers of these difficult decisions and enables consumers to always be able to select the tariff that is the most cost-efficient right now, so that a bad decision taken a long time ago can have significantly less impact on one's personal finances today and thereby giving some of the power back to the consumers against the giants controlling the energy market.

### SUMMARY

It is for that reason an object of the present invention to provide a system and method for controlling the electricity supply, and in particular for selecting an electricity feed to a consumer, which alleviates all or at least some of the above-discussed drawbacks of the presently known systems.

This object is achieved by means of an electricity supply control system and method as defined in the appended claims.

According to a first aspect of the present invention there is provided an electricity supply control system for connecting at least one of a load and a source to an electric grid, said system comprising;
at least two electric meters each associated with a different supply regime having different parameters;
a switching unit configured to separately connect each electric meter of said at least two electric meters between the power grid and the load/source; and
a control unit for controlling the switching unit in order to connect or disconnect each electric meter;
wherein the control unit comprises communication circuitry for communicating with a remote data repository in order to obtain real-time data relating to at least one of said parameters; and
wherein the control unit is configured to connect one of the at least two electric meters and disconnect the other electric meter(s) based on said real-time data and at least one predefined condition. Hereby, the consumer is granted greater control of his/her setup for electric power consumption, and the decision making process of selecting a service provider is drastically facilitated.

It is to be understood that the system according to the first aspect may, in a first scenario, be used to connect a load to the electric grid, in which case the load may for example be a consumer (e.g. a house-hold, commercial business, etc.) and the different supply regimes are in reference to energy providers, e.g. owners/operators of various power plants. However, the system may also, in a second scenario, be used to connect a source to the electric grid, in which case the source may for example be a small energy provider, (e.g. a farm with a windmill or a residential solar panel, etc.) and the different supply regimes are in reference to the different energy purchasers, e.g. energy companies which buy energy from e.g. local sources. In this second scenario the different parameters may appropriately be then prices that the different energy purchases offer, e.g. one electric meter may be associated with a floating purchase price based on the current demand/need, and another electric meter may then appropriately be associated with a fixed purchase price with a fixed contract period. The electric meters may accordingly be at least two separate unidirectional electric meters for each of the two scenarios, or the at least two electric meters may be bi-directional electric meters as known in the art. In the following the invention will generally be described in reference to the first scenario, however, the skilled person readily understands how to interpret the following in order to apply the inventive concept according to the second scenario.

The present invention is based on the realization that by providing a system having at least two electric meters which are both connected to the same power grid but associated with different supply regimes, one can realize an energy distribution system that is far more dynamic and more adapted to current consumer needs than any other previously known system. The different supply regimes are in turn associated with different parameters which can e.g. be different energy suppliers, different types of power plants, different tariff rates, emission levels/values, purchase rates, etc. The present invention is particularly useful when considering the ever-growing global need for environmentally friendly solutions. For example, many consumers, i.e. household residences, companies, etc., would probably consider paying a little extra in order to buy "green electricity" compared to less environmentally friendly alternatives, e.g. electricity produced from fossil fuels or from a nuclear (fission) reaction.

However, many consumers refrain from doing so because of the fluctuations in energy prices and because of the financial impact this one single choice can have in the future. In other words, even if a consumer would consider paying a little more for the good of the environment, the consumer cannot predict the future and the potential destructive impact that decision may have on their finances. The consumer in the present context is to be understood as a private person or a commercial entity. Therefore many consumers which would potentially select the environmentally friendly alternative are forced to select the environmentally harmful electricity provider instead. Thus, by providing a solution which allows a consumer to have a more dynamic electricity supply control system that is allowed to switch rather effortlessly between the supply regimes, the electricity supply can be more adapted to the consumer's present needs and most of all abilities. The consumer is hereby allowed to provide at least one predefined condition regarding which electricity supply is to be used, such as e.g. connect the electric meter associated with the "green energy" unless the difference in tariff rates is above a certain predefined level, thus the consumer is allowed to choose the electric supply which in greater coherence with their current needs and abilities. In other words, one of the at least one predefined condition can be selecting the electric meter associated with a supply regime having a desired or optimal parameter value.

According to one exemplary embodiment, the control unit is further configured to connect one of the at least two electric meters and disconnect the other electric meters at any given moment in time, based on said real-time data and at least one predefined condition. This means that a switch between different electric meters and thereby different supply regimes can happened at any moment in time, given that the at least one predefined condition is fulfilled. For example, if a consumer has two electric meters, i.e. two supply regimes and where the different parameters are their respective tariff rates, one of which is a so called floating tariff rate (i.e. constantly changing) and the other is a fixed tariff rate, with a set subscription period. The predefined condition may be to connect whichever of the two electric meters is associated with the lowest rate. Thus, since the control unit is configured to collect/obtain real-time data relating to at least one of the tariff rates it can switch instantaneously when it detects that the floating rate goes below the fixed rate, or vice versa, thus the consumer can be provided with the most cost-efficient electricity at all times. Thus, the consumer is not forced to wait until the end-period of a contract in order to switch, but instead they may be connected to the lowest rate at all times. The control unit may be configured to only obtain/retrieve the real-time data relating to the floating tariff rate, while the fixed rate may be provided and stored locally within a memory unit comprised by the control unit and thus be obtained from a local data repository (i.e. the memory unit). Similarly other parameters which are less prone to changing rapidly over time relating to the supply regimes may be provided and stored locally, e.g. emission rates, type of energy source, etc.

According to another exemplary embodiment the control unit is further configured to connect one of the at least two electric meters before disconnecting another electric meter, in order to achieve a seamless switch. This ensures that there are no power interruptions between switching events which may potentially damage certain components or appliances.

According to another exemplary embodiment, the at least two electric meters are integrated in one single unit. This allows for a compact and user-friendly solution. The electrician/service provider may then simply install this one single unit and connect the appropriate cables to the unit instead of having to do one installation for every electric meter. Moreover, the switching unit and control unit may be integrated into one single unit.

According to yet another exemplary embodiment, the control unit comprises a memory unit comprising a database including emission values associated with different types of energy sources, wherein said different parameters are type of energy source, and wherein one of said at least one predefined conditions is selecting the energy source with the lowest emission value retrieved from said database. This further highlights the environmental potential of the invention. In this embodiment, a consumer may be provided with the most environmentally friendly source of power at all times. The database may be an internally stored database or a remote database (e.g. in the "cloud") which the control unit may access. Moreover, there might be additional predefined conditions, i.e. combining the retrieved emission values with a contingency regarding the tariff rates which may be retrieved as real-time data from a remote data repository. For example, the control unit may be configured to connect the electric meter associated with the supply regime which in turn is associated with the lowest emission value, given that the tariff rate does not exceed a predefined value, otherwise select the second lowest emission value if its tariff rate in turn does not exceed the predefined value, and so on. Hereby a consumer is allowed to select the most environmentally friendly service provider that he or she can currently afford. Moreover, if the consumer's preferences change, he or she can simply configure the predefined conditions in order to make the system conform to the current preferences, thus the system is extremely dynamic and operates according to real-time conditions.

According to another aspect of the present invention, there is provided a method for connecting at least one of load and a source to an electric grid in an electricity supply control system comprising at least two electric meters each associated with a different supply regime having different parameters, a switching unit configured to separately connect each electric meter of said at least two electric meters between the power grid and the load/source, wherein said method comprises:
retrieving real-time data from a remote data repository relating to at least one of said parameters;
operating said switching unit in order to connect one electric meter and disconnect the other electric meter(s) based on said real-time data and at least one predefined condition.

The switching unit may manually operated, e.g. by manually flipping a set of switches or it may be operated by supplying a control signal to the switching unit in order to connect one electric meter and disconnect the other electric meter(s) based on said real-time data and at least one predefined condition.

With this aspect of the invention, similar advantages, exemplary embodiments and preferred features are present as in the previously discussed first aspect of the invention.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 illustrates a block diagram representation of an electricity supply control system in accordance with an embodiment of the present invention.
Fig. 2 illustrates a block diagram representation of an electricity supply control system in according with another embodiment of the present invention.
Fig. 3 illustrates a process flowchart in accordance with an embodiment with reference to the configuration of Fig. 1.
Fig. 4 illustrates a flowchart in accordance with another embodiment of the present invention.

### DETAILED DESCRIPTION

In the following detailed description, some embodiments of the present invention will be described.

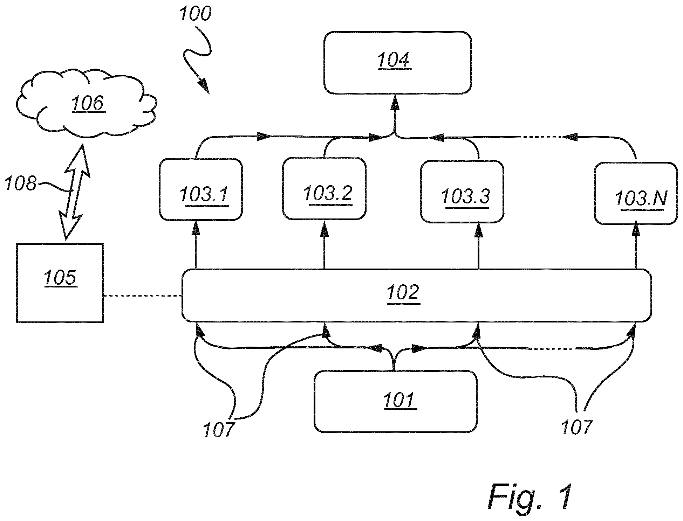

Fig. 1 shows a block diagram of an embodiment of the invention which will be described in greater detail in the following. In the figure there is a block representation of several different electricity supply regimes 101 which supply electricity via a power grid to consumers. A power grid is to be understood as an electric grid which is a network of synchronized power (electricity) providers and consumers that are connected by transmission and distribution lines, i.e. a transmission system for electricity. The power grid is often operated by one or more control centres. The consumer is normally limited to one entity that is responsible for the transmission of electricity; however, in deregulated energy markets the consumer is often free to choose between various suppliers or providers of electricity. Thus, the block 101 can be seen as a plurality of suppliers. However, if applicable, the block 101 can be seen as a single supplier that provides different types of supply regimes. A supply regime in this context is to be understood as an electricity supplier having a specific set of parameters associated with it, such as e.g. tariff rate (price per billing unit of electricity), type of power plant/energy source, location, operating status, etc.

Further, the system 100 comprises a plurality N (N being any suitable integer) of electric meters 103.1 - 103.N, or sometimes called supply meters, which measure the amount of electric energy consumed by a consumer (or load) 104. Where each of the electric meters 103.1 - 103.N is associated with a different supply regime having different parameters, e.g. different tariff rates (most commonly price per kilowatt hour [kWh]) or type of power plant (e.g. nuclear, wind, solar, hydro, coal, etc.). Moreover, the system 100 does not have to be a fixed system, it may also be a mobile system provided in e.g. an electric car, boat, etc. For example it may be used to provide the most favourable price of electricity when charging an electric car directly from the power grid, or when selling the electricity stored in the electric car back to the grid.

Further, the system 100 further comprises a switching unit 102 configured to separately connect each of the electric meters 103.1 - 103.N between the power grid and the load. The switching unit may therefore be in operational connection with each of the electric meters 103.1 - 103.N. The switching unit 102 can be controlled, e.g. by a control signal, in order to activate or deactivate any particular electricity feed (indicated by arrows 107) from any particular supply regime 101. This is for example done by connecting or disconnecting any particular electric meter 103.1 - 103.N between the load 104 and the power grid. It should be noted that the switching unit 102 is illustrated between the power grid and the electric meters 103.1 - 103.N in this particular example, it may however be positioned between the load 104 and the electric meter 103.1 - 103. N.

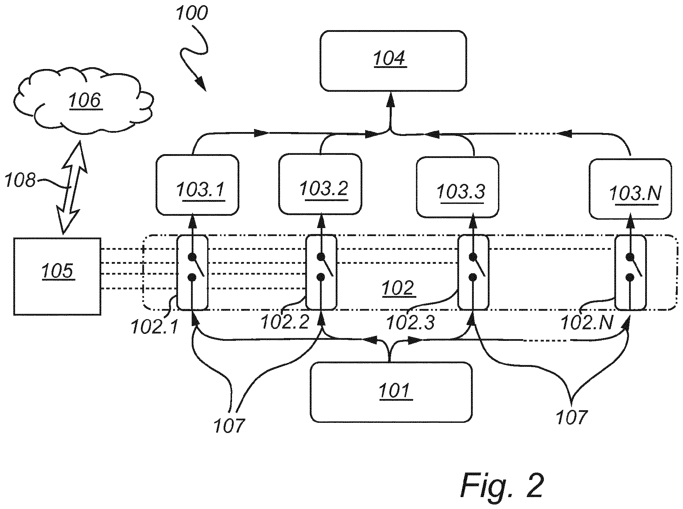

The switching unit 102 can also be a single switching unit comprising a plurality of switching elements (102.1 - 102.N in Fig. 2), one for each of the electric meters in accordance with an exemplary embodiment of the invention. Moreover, the electric meters 103.1 - 103.N may be integrated in one single unit. The single electric meter unit may then comprise appropriate circuitry for measuring the consumed electric energy for a plurality of different supply regimes 101. In other words, the single electric meter unit may comprise a plurality of inputs (one for each supply regime of the plurality of supply regimes 101) and one output for the load 104.

The switch between two supply regimes may be done such that the two supply regimes associated with the two electric meters 103.1, 103.2 are simultaneously providing electricity for a short duration of time, in order to ensure no interruption of the electricity feed to the consumer during the event of a switch. This can for example be done, in accordance with the embodiment illustrated in Fig. 2, by having both of the switching elements 102.1 - 102.N associated with the two electric meters 103.1, 103.2 in a conducting state for a short duration of time, e.g. 1-5 seconds or less (in the millisecond range) depending on the intended application. It can also be done by having a capacitor within the switching unit 102 to act as an intermediate supply during switching events.

The system 100 further comprises a control unit 105, e.g. an IOT (Internet of Things) control box, which is configured to control the switching unit 102, i.e. to effectively connect or disconnect each electric meter 103.1 - 103.N between the electric grid and the load 104. The control unit 105 also has communication circuitry for communicating (indicated by arrow 108) with a remote data repository 106 in order to real-time data relating to the parameters which are associated with each of the supply regimes 101 in the system. This can for example be obtaining real-time values of the current tariff rate for one or all of the supply regimes 101.

The control unit 105 may further contain suitable software or hardware for comparing the obtained data, and to control the switching unit 102 based on the outcome and a predefined condition, e.g. connecting the electric meter of the plurality of electric meters 102.1 - 102.N that is associated with a supply regime 101 having a parameter that has the lowest or highest value.

Similarly, the electric meters 103.1 - 103.N may measure the amount of electric energy supplied by a source 104 (e.g. a farm with a windmill or a resident solar panel) to a power grid 101 in accordance with the second scenario discussed earlier in the application. The arrows 107 may simply then be facing in opposite directions. For the sake of brevity it is assumed that the skilled person readily understands how the inventive concept is applied in the second scenario and can extract the necessary information from the description without these specific details.

Next, an exemplary embodiment of the invention will be described in order to further elucidate the inventive concept; the different parameters associated with the electric meters 103.1 - 103.N are chosen to be tariff rates. This should however not be construed as limiting to the scope of the invention but instead a mere example of several viable parameters, e.g. type of power plant, location of the power plant, emission rates, operating status, etc. For the sake of convenience, the number of parameters associated with each supply regime is in this example chosen to be only one. Moreover the predefined condition, upon which the connecting or disconnecting of an electric meter is based, is then suitably chosen to be a lowest rate, i.e. the electric meter associated with lowest value of the retrieved real-time data is chosen to be connected, and the other electric meters are disconnected.

Further, when the system is operational, the control unit can be configured to analyze the real-time data in order to determine the lowest tariff rate at any given moment in time. For example, a first electric meter 103.1 may be associated with a floating tariff rate, meaning that the price per billing unit of electricity changes over time, e.g. hourly, daily weekly, etc. A second electric meter 103.2 may be associated with a fixed tariff rate. In this exemplary embodiment, the number of electric meters 103.1 - 103.N in the system is, for the sake of brevity, chosen to be only two, i.e. N=2.

The control unit 105 here communicates over a wireless communication link 108 with a remote data repository 106 in order to obtain real-time values of these two parameters (tariff rates), or at least for the floating tariff rate, in order to compare the two values in order to determine which value is the lowest (i.e. which tariff rate is the cheapest) at any given moment in time. The fixed rate may alternatively be provided directly to the control unit, e.g. via a user-interface, and stored within a memory unit of the control unit. The control unit can then further be configured to control the switching unit 102 in order to disconnect the supply from the supplier having the currently higher tariff rate and to connect the supply from the supplier having the currently lower tariff rate, thereby ensuring that the consumer (load 104) receives the most cost-efficient electricity, assuming that the supply with the higher tariff rate was the currently active one. The load 104 can be a household residence, an office building or any industrial premises.

As is readily understood by the skilled artisan the inventive concept can be practiced with a system having only two electric meters 103.1, 103.2, with one switching element 102.1, 102.2 associated with each electric meter 103.1, 103.2. However, one can also have more than two electric meters, where for example one has a floating tariff rate and the others have fixed tariff rates of different contract lengths, e.g. 2, 3, 5 or 10 years. Moreover, one can have a plurality of electric meters each being associated with a floating tariff rate, but each from a different electricity supplier. For example if the price per billing unit were to differ between the floating tariff rates from the various suppliers, e.g. that during some months (or weeks, days, hours) supplier A has the lowest floating tariff rate, while during other time periods supplier B has the lowest floating tariff rate and during some other time periods supplier C has the lowest floating tariff rate, etc.

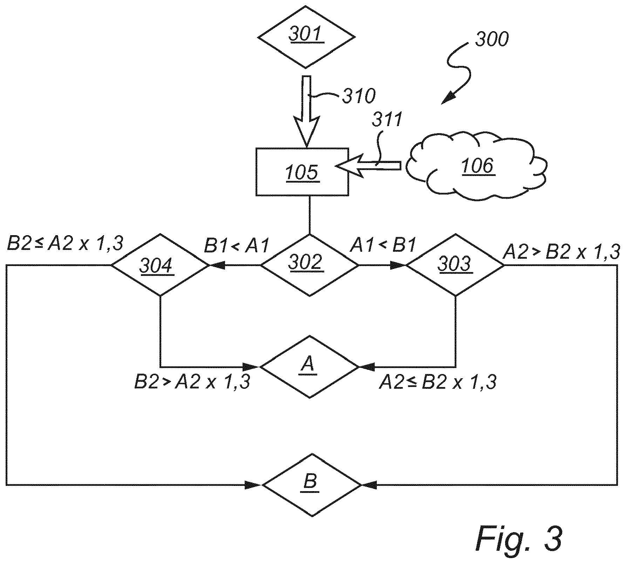

To facilitate the understanding of the present invention, a detailed example is provided in reference to Fig. 3. The process 300 illustrated in Fig. 3 is applicable in an example electricity supply system, comprising two electric meters each associated with a different supply regime having different parameters. The first supply regime, called supply regime A, is an electricity supplier where the electricity is generated at a power plant having an emission value A1, fixed tariff rate A2 with a set contract or subscription length. The second supply regime B is an electricity supplier where the electricity is generated at a power plant having an emission value B1 and a floating tariff rate B2 which changes by the hour. The control unit 105 of the system is then provided with a predefined condition 301, which is to activate (or connect) the electric meter associated with the supply regime having the lowest emission value unless the tariff rate of the supply regime having the lowest emission value is more than 1.3 times greater than the tariff rate of the other supply regime. The control unit 105 can be provided, as indicated by the arrow 310, with this predefined condition by a consumer e.g. by a user-interface provided on the control unit or on a website connected to the control unit 105. Further, the control unit 105 retrieves, as indicated by the arrow 311, real-time data, relating to the parameters associated with the two supply regimes A and B, from a remote data repository 106.

Next, the control unit 105 compares 302 the different emission values A1 and B1 in order to determine which value is the lowest value, in accordance with the predefined condition 301. This can be implemented by appropriately designed hardware, software or a combination thereof within the control unit 105, and will for the sake of brevity not be described in any greater detail, however, one having ordinary skill in the relevant art will readily recognize that the invention can be practiced without one or more of the specific details.

In a first possible scenario A1 is deemed lower than B1, and the control unit then compares 303 the two tariff rates according to the predefined condition 301, i.e. compares the tariff rate A2 of supply regime A to the tariff rate B2 of supply regime B but with a factor of 1,3 multiplied to the tariff rate B2 of supply regime B. Consequently, if the tariff rate A2 of supplier A is less than (or equal to) 1.3 times the tariff rate B2 of supply regime B, the control unit 105 determines that the electric meter associated with supply regime A should be active, i.e. connected between the power grid and the load.

Based on which one of the two supply regimes (A or B) is the currently active one, i.e. which one of the two electric meters is currently connected between the power grid and the load, the control unit may either supply a control signal in order to perform a switch (if B is currently active) or do nothing (if A is currently active).

However, if the comparison 303 of the tariff rates would have given another result, i.e. that tariff rate A2 times was greater than 1.3 times the tariff rate B2 it would not matter that A2 was associated with a lower emission rate, the control unit would then determine that supply regime B should be active, i.e. that the electric meter associated with supply regime B should be connected, in accordance with the predefined condition 301.

Analogously, if it would have been determined that supply regime B had the lowest emission value B1 of the two emission values A1, B1 the control unit may determine which one of the two electric meters should be connected based on a comparison 304 between the two retrieved tariff rates A2, B2 in accordance with the predefined condition 301. Thus, a consumer who is environmentally conscious is provided with a very dynamic alternative regarding the operation of their electricity supply and which is easily configurable to each specific consumer. However, this is merely one exemplary embodiment of how the invention may be utilized. Obvious alternatives and modifications such as, providing the emission rates A1, A2 directly, e.g. via a user-interface, to the control unit in order to omit one step in the process 300 must be considered to fall within the scope of the invention. Furthermore, the scenario with equal emission values was omitted for the sake of brevity, however as the skilled artisan readily understands the predefined conditions may easily be adapted to account for such a scenario, e.g. to then directly compare the tariff rates of supply regimes having equal emission values.

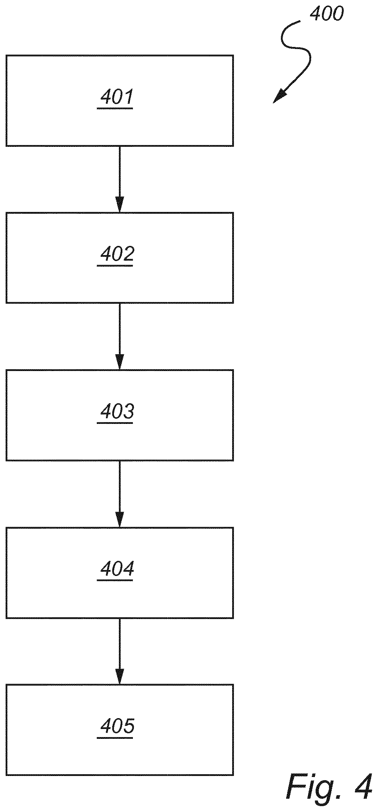

Fig. 4 illustrates a flowchart 400 in order to illustrate a method in accordance with one embodiment of the invention. Firstly, at least two electric meters, each associated with a different supply regime having different parameters are provided 401. Next, a switching unit is connected 401 to the at least two electric meters. The switching unit is configured to separately connect each of the at least two electric meters between a power grid and a load. Thus, the switching unit may be at least two switches, were each switch is arranged between each of the at least two electric meters and the power grid, or arranged between each of the at least two electric meters and the load. The switching unit may alternatively also be an electric relay as known in the art.

Further, a predefined condition is set 403, e.g. by a user or operator. The condition may e.g. be selecting the supply regime having the largest output of power, which is then one parameter that differs between the different supply regimes, and real-time values of this parameter may be retrieved for each of the supply regimes. Other viable parameters may be tariff rate, emission rate, etc. as previously discussed.

Moving on, real-time data from a remote data repository is retrieved 404. The real-time data may then accordingly a quantified value representing the power output for each of the different supply regimes. This can e.g. be used to evenly distribute the load on a plurality of supply regimes. Next, based on this real-time data and the predefined condition a control signal is supplied 405 in order to control the switching unit so that it connects the appropriate electric meter and disconnects the other electric meter(s). It is readily understood that if the correct electric meter already was connected when the control signal was supplied 404, this merely results in that the configuration of the switching unit is maintained, alternatively if the appropriate electric meter was not connected a switching event is enabled.

The invention has now been described with reference to specific embodiments. However, several variations of the electrical motor control system are feasible. For example, the control unit may be configured with fixed values for some of the parameters that do not change over time, as already exemplified. Further, the controller may be remotely configured from e.g. a web-interface.

## Claims

1. An electricity supply control system (100) for connecting at least one of a load (104) and a source (101) to an electric grid, said system comprising;
at least two electric meters (103) each associated with a different supply regime having different parameters;
a switching unit (102) configured to separately connect each electric meter of said at least two electric meters between the power grid and the load/source; and
a control unit (105) in operational connection with the switching unit and configured to control the switching unit in order to connect or disconnect each electric meter;
wherein the control unit comprises communication circuitry for communicating (108) with a remote data repository (106) in order to obtain real-time data relating to at least one of said parameters; and
wherein the control unit is configured to connect one of the at least two electric meters and disconnect the other electric meter(s) based on said real-time data and at least one predefined condition.

2. The electricity supply control system (100) according to claim 1, wherein the control unit (105) is further configured to connect one of the at least two electric meters (103) and disconnect the other electric meters at any given moment in time, based on said real-time data and at least one predefined condition.

3. The electricity supply control system (100) according to claim 1 or 2, wherein the control unit (105) is further configured to connect one of the at least two electric meters (103) before disconnecting another electric meter, in order to achieve a seamless switch.

4. The electricity supply control system (100) according to any one of claims 1 to 3, wherein said at least two electric meters (103) are integrated in one single unit.

5. The electricity supply control system (100) according to any one of claims 1-4, wherein said different parameters are different tariff rates, and wherein one of said at least one predefined condition is selecting the lowest value.

6. The electricity supply control system (100) according to any one of the preceding claims, wherein said control unit (105) comprises a memory unit comprising a database including emission values associated with different types of energy sources (101), wherein said different parameters are type of energy source, and wherein one of said at least one predefined conditions is selecting the energy source with the lowest emission value retrieved from said database.

7. A method for connecting at least one of a load (104) and a source (101) to an electric grid in an electricity supply control system (100) comprising at least two electric meters (103) each associated with a different supply regime having different parameters, a switching unit (102) configured to separately connect each electric meter of said at least two electric meters between the power grid and the load/source, wherein said method comprises:
retrieving (404) real-time data from a remote data repository (106) relating to said at least one of said parameters; and
operating (405) said switching unit in order to connect one electric meter and disconnect the other electric meter(s) based on said real-time data and at least one predefined condition.

8. The method according to claim 7, wherein the switching unit (102) is operated to connect one of the at least two electric meters (103) and disconnect the other electric meters at any given moment in time, based on said real-time data and at least one predefined condition.

9. The method according to claim 7 or 8, further comprising connecting one of the at least two electric meters (103) before disconnecting another electric meter, in order to achieve a seamless switch.

10. The method according to one of claims 7 - 9, wherein said different parameters are different tariff rates, and wherein one of said at least one predefined condition is selecting the lowest value.

## Patentansprüche

1. Elektrizitätsversorgungssteuerungssystem (100) zum Anschließen von mindestens einem von einer Last (104) und einer Quelle (101) an ein Elektrizitätsnetz, wobei das System aufweist:
mindestens zwei Stromzähler (103), von denen jeder einem anderen Versorgungsregime zugeordnet ist, das unterschiedliche Parameter aufweist,
eine Schalteinheit (102), die eingerichtet ist, jeden Stromzähler von den mindestens zwei Stromzählern zwischen dem Stromnetz und der Last/Quelle separat anzuschließen, und
eine Steuerungseinheit (105), die in einer Funktionsverbindung mit der Schalteinheit ist und eingerichtet ist, die Schalteinheit zu steuern, um jeden Stromzähler anzuschließen oder abzuklemmen,
wobei die Steuerungseinheit Kommunikationsschaltungen zum Kommunizieren (108) mit einem entfernt angeordneten Datenspeicher (106) aufweist, um Echtzeitdaten zu erhalten, die sich auf mindestens einen der Parameter beziehen, und
wobei die Steuerungseinheit eingerichtet ist, auf Basis der Echtzeitdaten und mindestens einer vorgegebenen Bedingung einen von den mindestens zwei Stromzählern anzuschließen und den(die) anderen Stromzähler abzuklemmen.

2. Elektrizitätsversorgungssteuerungssystem (100) nach Anspruch 1, wobei die Steuerungseinheit (105) ferner eingerichtet ist, zu einem beliebigen gegebenen Zeitpunkt auf Basis der Echtzeitdaten und mindestens einer vorgegebenen Bedingung einen von den mindestens zwei Stromzählern (103) anzuschließen und die anderen Stromzähler abzuklemmen.

3. Elektrizitätsversorgungssteuerungssystem (100) nach Anspruch 1 oder 2, wobei die Steuerungseinheit (105) ferner eingerichtet ist, einen von den mindestens zwei Stromzählern (103) anzuschließen, bevor ein weiterer Stromzähler abgeklemmt wird, um ein unterbrechungsfreies Schalten zu erreichen.

4. Elektrizitätsversorgungssteuerungssystem (100) nach einem der Ansprüche 1 bis 3, wobei die mindestens zwei Stromzähler (103) in einer einzigen Einheit zusammengefasst sind.

5. Elektrizitätsversorgungssteuerungssystem (100) nach einem der Ansprüche 1-4, wobei die unterschiedlichen Parameter unterschiedliche Tarifsätze sind und wobei eine von der mindestens einen vorgegebenen Bedingung das Auswählen des niedrigsten Wertes ist.

6. Elektrizitätsversorgungssteuerungssystem (100) nach einem der vorhergehenden Ansprüche, wobei die Steuerungseinheit (105) eine Speichereinheit mit einer Datenbank aufweist, die Emissionswerte enthält, die mit den unterschiedlichen Typen von Energiequellen (101) verbunden sind, wobei die unterschiedlichen Parameter ein Typ der Energiequelle sind und wobei eine von der mindestens einen vorgegebenen Bedingung das Auswählen der Energiequelle mit dem niedrigsten Emissionswert ist, der in der Datenbank gefunden wurde.

7. Verfahren zum Anschließen von mindestens einem von einer Last (104) und einer Quelle (101) an ein Elektrizitätsnetz in einem Elektrizitätsversorgungssteuerungssystem (100) mit mindestens zwei Stromzählern (103), von denen jeder einem anderen Versorgungsregime zugeordnet ist, das unterschiedliche Parameter aufweist, mit einer Schalteinheit (102), die eingerichtet ist, jeden Stromzähler von den mindestens zwei Stromzählern separat zwischen dem Stromnetz und der Last/Quelle anzuschließen, wobei das Verfahren umfasst:
Aufsuchen (404) von Echtzeitdaten aus einem entfernt angeordneten Datenspeicher (106), die sich auf mindestens einen der Parameter beziehen, und
Betreiben (405) der Schalteinheit, um auf Basis der Echtzeitdaten und mindestens einer vorgegebenen Bedingung einen Stromzähler anzuschließen und den(die) anderen Stromzähler abzuklemmen.

8. Verfahren nach Anspruch 7, wobei die Schalteinheit (102) betrieben wird, zu einem beliebigen gegebenen Zeitpunkt auf Basis der Echtzeitdaten und mindestens einer vorgegebenen Bedingung einen von den mindestens zwei Stromzählern (103) anzuschließen und die anderen Stromzähler abzuklemmen.

9. Verfahren nach Anspruch 7 oder 8, ferner umfassend, dass einer von den mindestens zwei Stromzählern (103) angeschlossen wird, bevor ein weiterer Stromzähler abgeklemmt wird, um ein unterbrechungsfreies Schalten zu erreichen.

10. Verfahren nach einem der Ansprüche 7-9, wobei die unterschiedlichen Parameter unterschiedliche Tarifsätze sind und wobei eine von der mindestens einen vorgegebenen Bedingung das Auswählen des niedrigsten Wertes ist.

## Revendications

1. Système de commande d'alimentation d'électricité (100) pour brancher au moins l'une d'une charge (104) et d'une source (101) à un réseau électrique, ledit système comprenant :
au moins deux compteurs électriques (103), chacun d'eux étant associé à un régime d'alimentation différent comportant des paramètres différents ;
une unité de commutation (102) configurée pour brancher séparément chaque compteur électrique parmi lesdits au moins deux compteurs électriques entre le réseau électrique et la charge/source ; et
une unité de commande (105) branchée de manière opérationnelle à l'unité de commutation et configurée pour commander l'unité de commutation afin de brancher ou de débrancher chaque compteur électrique ;
dans lequel l'unité de commande comprend une circuiterie de communication pour communiquer (108) avec un référentiel de données distant (106) afin d'obtenir des données en temps réel relatives à au moins l'un desdits paramètres ; et
dans lequel l'unité de commande est configurée pour brancher l'un des au moins deux compteurs électriques et débrancher l'un ou plusieurs autres compteurs électriques sur la base desdites données en temps réel et d'au moins une condition prédéfinie.

2. Système de commande d'alimentation d'électricité (100) selon la revendication 1, dans lequel l'unité de commande (105) est en outre configurée pour brancher l'un des au moins deux compteurs électriques (103) et débrancher les autres compteurs électriques à tout moment donné, sur la base desdites données en temps réel et de ladite au moins une condition prédéfinie.

3. Système de commande d'alimentation d'électricité (100) selon la revendication 1 ou 2, dans lequel l'unité de commande (105) est en outre configurée pour brancher l'un des au moins deux compteurs électriques (103) avant de débrancher un autre compteur électrique, afin de réaliser une commutation transparente.

4. Système de commande d'alimentation d'électricité (100) selon l'une quelconque des revendications 1 à 3, dans lequel lesdits au moins deux compteurs électriques (103) sont intégrés dans une unité unique.

5. Système de commande d'alimentation d'électricité (100) selon l'une quelconque des revendications 1 à 4, dans lequel lesdits paramètres différents sont des taux tarifaires différents, et dans lequel l'une de ladite au moins une condition prédéfinie est la sélection de la plus basse valeur.

6. Système de commande d'alimentation d'électricité (100) selon l'une quelconque des revendications précédentes, dans lequel ladite unité de commande (105) comprend une unité de mémoire comprenant une base de données comprenant des valeurs d'émission associées à différents types de sources d'énergie (101), dans lequel lesdits paramètres différents sont un type de source d'énergie, et dans lequel l'une de ladite au moins une condition prédéfinie est la sélection de la source d'énergie avec la plus basse valeur d'émission récupérée de ladite base de données.

7. Procédé de branchement d'au moins l'une d'une charge (104) et d'une source (101) à un réseau électrique dans un système de commande d'alimentation d'électricité (100) comprenant au moins deux compteurs électriques (103), chacun d'eux étant associé à un régime d'alimentation différent comportant des paramètres différents, une unité de commutation (102) configurée pour brancher séparément chaque compteur électrique parmi lesdits au moins deux compteurs électriques entre le réseau électrique et la charge/source, dans lequel ledit procédé comprend :
la récupération (404) de données en temps réel d'un référentiel de données distant (106) en ce qui concerne ledit au moins l'un desdits paramètres ; et
le fonctionnement (405) de ladite unité de commutation afin de brancher un compteur électrique et de débrancher l'un ou plusieurs autres compteurs électriques sur la base desdites données en temps réel et de ladite au moins une condition prédéfinie.

8. Procédé selon la revendication 7, dans lequel l'unité de commutation (102) est utilisée pour brancher l'un des au moins deux compteurs électriques (103) et débrancher les autres compteurs électriques à tout moment donné, sur la base desdites données en temps réel et de ladite au moins une condition prédéfinie.

9. Procédé selon la revendication 7 ou 8, comprenant en outre le branchement de l'un des au moins deux compteurs électriques (103) avant de débrancher un autre compteur électrique, afin de réaliser une commutation transparente.

10. Procédé selon l'une quelconque des revendications 7 à 9, dans lequel lesdits paramètres différents sont des taux tarifaires différents, et dans lequel l'une de ladite au moins une condition prédéfinie est la sélection de la plus basse valeur.
